# EUROPEAN PATENT APPLICATION

(11) **EP 4 322 311 A1**
(43) Date of publication of application: **14.02.2024**
(21) Application number: 22940513.9
(22) Date of filing: 21.07.2022
(51) Int. Cl.: H01M 50/503, H01M 50/507, H01M 50/516, H01M 50/522

(54) **BUSBAR MEMBER, BATTERY, AND ELECTRIC DEVICE**

(30) Priority: 12.05.2022 CN 202221127326 U
(71) Applicant: Contemporary Amperex Technology Co., Limited, Ningde City, Fujian 352100 (CN)
(72) Inventor: LIU, Shaozhong, Ningde City, Fujian 352100 (CN); FENG, Chipin, Ningde City, Fujian 352100 (CN); ZHENG, Chenling, Ningde City, Fujian 352100 (CN); WANG, Chong, Ningde City, Fujian 352100 (CN); FANG, Zhengyu, Ningde City, Fujian 352100 (CN)
(74) Representative: Gong, Jinping
(86) International application number: PCT/CN2022/107101
(87) International publication number: WO 2023/216417

(57) **Abstract**

The present application discloses a confluence component, a battery and an electrical device. The confluence component of the embodiment of the present application has a predetermined length and a predetermined thickness, the confluence component comprises connection parts and a main body part arranged alternatively in a length direction of the confluence component, the connection parts are connected at two sides of the main body part in the length direction, the connection part comprises a connection region electrically connected to the battery cell, and wherein in a thickness direction of the confluence component, the main body part is at least partially recessed and is deformable under a preset stress to absorb vibrations in the thickness direction. The confluence component provided in the embodiment of the present application may mitigate the problem of damage and fracture of connection between the battery cells caused by vibrations.

## Description

### CROSS-REFERENCE TO RELATED APPLICATION

The present application claims priority to Chinese Patent Application No. 202221127326.7, filed on May 12, 2022 and entitled "CONFLUENCE COMPONENT, BATTERY, AND ELECTRICAL DEVICE", which is incorporated herein by reference in its entirety.

### TECHNICAL FIELD

The present application relates to a technical field of battery, and particularly relates to a confluence component, a battery and an electrical device.

### BACKGROUND

In some situations, the battery usually includes a plurality of battery cells, which are arranged in series or parallel and are adjusted to the desired output voltage. In such a battery, the high voltage connections between the plurality of battery cells are usually achieved by confluence components. The confluence component is connected between adjacent and spaced battery cells. Therefore, a portion of the middle region of the confluence component is unsupported and is suspended. Under a condition that there are relative vibrations between two battery cells connected by the confluence component, the confluence component is prone to fatigue fracture due to stress concentration or repeated stress, resulting in high voltage connection failure, which ultimately affects the output of the battery, and reduces the reliability of the module.

Therefore, there is an urgent need for a confluence component that can improve the connection reliability of the battery, as well as a corresponding battery and an electrical device.

### SUMMARY

Embodiments of the present application provide a confluence component, a battery and an electrical device, which can absorb vibrations in the stacked direction, and mitigate the problem of fatigue fracture of the confluence component.

In a first aspect, an embodiment of the present application provides a confluence component for connecting battery cells, wherein the confluence component has a predetermined length and a predetermined thickness, the confluence component includes connection parts and a main body part arranged alternatively in a length direction of the confluence component, the connection parts are connected at two sides of the main body part in the length direction, the connection part includes a connection region electrically connected to the battery cell, and wherein in a thickness direction of the confluence component, the main body part is at least partially recessed and is deformable under a preset stress to absorb vibrations in the thickness direction.

In the technical solution provided by the embodiment of the present application, the confluence component for forming electrical connections between the battery cells is configured to include the connection parts and the main body part arranged alternatively in the length direction of the confluence component. Here, the connection part is connected to the battery cell. The main body part is connected between adjacent battery cells, so that the battery cells at two sides of the main body part are connected. In the thickness direction of the confluence component, the main body part has a portion that is recessed, so that the main body part has certain elasticity. Therefore, the main body part may be deformed under the action of stress concentration to absorb the vibrations in the thickness direction. Under a condition that the relative vibrations along the thickness direction is generated between the battery cells connected by the connection parts on the two sides of the main body part, the main body part may be deformed and may absorb the vibrations through the deformation and the elasticity of the recessed part, thereby avoiding fatigue fracture of the main body part, and improving the reliability of the overall connection of the confluence component.

In some embodiments, the main body part is made of a same material as the connection parts, and the main body part and the connection parts are integrally formed. The confluence component in the embodiment of the present application may be made of a same material and may be integrally formed from a whole material, which may simplify the process flow and reduce the process cost.

In some embodiments, the connection part includes a plurality of connection layers stacked along the thickness direction. The strength of the connection part can be increased by pressing the multi-layer material to form the connection part, so that the connection between the battery cells are more reliable.

In some embodiments, the connection part includes a reinforced plating layer at least partially disposed in the connection region. The confluence component in the embodiment of the present application may also improve the strength of the connection region by adopting the method of forming a plating layer on the connection region connected to the battery cells, thereby making the electrical connection reliable.

In some embodiments, a strength of the main body part is less than a strength of the connection part. Compared with the connection part, the main body part can adopt materials with lower hardness and less strength, so that it is easier for the main body part to absorb vibrations without affecting the connection part.

In some embodiments, the main body part is welded to the connection part. In an embodiment where the strength of the main body part is less than the strength of the connection part, the main body part and the connection part may be connected by welding, which can make the connection stable without affecting the current conduction.

In some embodiments, the connection part and the main body part at least partially overlap in the thickness direction. In addition to docking and welding, the connection part and the main body part can at least partially overlap to fix the connection through the overlapped portion, and make the connection more stable.

In some embodiments, the connection part is provided with a first fixing hole, the main body part is provided with a second fixing hole, the confluence component further includes a fastener, the first fixing hole and the second fixing hole are fitted through the fastener, so as to fixedly connect the connection part to the main body part; and/or one of the main body part and the connection part is provided with a protruding end, and the other one is provided with a connection hole, the confluence component further includes a limit component, the protruding end passes through the connection hole and fits the limit component, so as to fixedly connect the connection part to the main body part. In an embodiment where the connection part and the main body part at least partially overlap, the connection part and the main body part may also be connected by punching a hole and using the fastener or the limit component, and the connection method is simple, stable in structure and easy to implement.

In some embodiments, the connection part is riveted to the main body part. The connection part and the main body part may also be fixedly connected by riveting, and the connection method has high stability and low cost.

In a second aspect, an embodiment of the present application provides a battery including a plurality of battery cells and the confluence component in the above embodiments, here, adjacent battery cells are electrically connected through the confluence component.

In a third aspect, an embodiment of the present application provides an electrical device including the battery provided in the embodiment in the second aspect.

The above description is merely an overview of the technical solution of the present application. In order to make the technical means of the present application more clear, the present application can be implemented according to the contents of the description. Further, in order to make the above and other objects, features and advantages of the present application more clear, the following detailed description of the present application is provided.

### BRIEF DESCRIPTION OF THE DRAWINGS

For those skilled in the art, various other advantages and benefits will be more apparent by reading the following detailed description of the preferred embodiments. The drawings are used only for the purpose of illustrating the preferred embodiments and are not considered to limit the present application. Further, in the whole drawings, the same reference numbers indicate the same features. In the drawings:
Fig. 1 is a schematic structure diagram of a vehicle provided by some embodiments of the present application;
Fig. 2 is an exploded view of a battery provided by some embodiments of the present application;
Fig. 3 is a schematic local structure diagram of the battery shown in Fig. 2;
Fig. 4 is a schematic structure diagram of a confluence component provided by some embodiments of the present application;
Fig. 5 is an exploded view of the confluence component shown in Fig. 4;
Fig. 6 is an exploded view of a confluence component provided by some embodiments of the present application;
Fig. 7 is a schematic structure diagram of a confluence component provided by some embodiments of the present application;
Fig. 8 is an exploded view of the confluence component shown in Fig. 7;
Fig. 9 is a schematic structure diagram of a confluence component provided by some embodiments of the present application;
Fig. 10 is an exploded view of the confluence component shown in Fig. 7;
Fig. 11 is a schematic structure diagram of a confluence component provided by some embodiments of the present application;
Fig. 12 is an exploded view of the confluence component shown in Fig. 11.

The reference numbers in the detailed description are as follows:
1000-vehicle; 2000-battery; 3000-controller; 4000-motor;
100-confluence component, 200-battery cell; 300-box;
10-connection part; 20-main body part; 30-fastener; 40-protruding end; 50-connection hole; 60-limit component; 70-first box part; 80-second box part; 90- accommodation space;
11-connection region; 12-connection layer; 13-first fixing hole; 21-recessed part; 22-second fixing hole;
X-length direction; Y-thickness direction.

### DETAILED DESCRIPTION

The embodiments of the technical solutions of the present application will be described in detail below with reference to the accompanying drawings. The following embodiments are only used to illustrate the technical solutions of the present application more clearly, and are therefore only used as examples, and cannot be used to limit the protection scope of the present application.

Unless otherwise defined, all technical and scientific terms used herein have the same meaning as commonly understood by those ordinary skilled in the technical field of the present application; the terms used herein are for the purpose of describing specific embodiments only, and are not intended to limiting the present application; the terms "comprise", "have" and any variations thereof in the specification and claims of the present application and the above description of the drawings are intended to cover non-exclusive inclusion.

In the description of the embodiments of the present application, the technical terms "first", "second" and the like are only used to distinguish different objects, and should not be understood as indicating or implying relative importance, or implying the number, specific sequential, or primary and secondary relationship of the technical features. In the description of the embodiments of the present application, "multiple" means two or more, unless otherwise expressly and specifically defined.

Reference herein to an "embodiment" means that a particular feature, structure, or characteristic described in connection with the embodiment can be included in at least one embodiment of the present application. The phrase "embodiment" in various places in the specification are not necessarily all referring to the same embodiment, nor a separate or alternative embodiment that is mutually exclusive of other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three kinds of relationships, such as A and/or B may indicate three cases of A alone, A and B, and B alone. In addition, the character "/" in this document generally indicates that the relationship between the related objects is "or".

In the description of the embodiments of the present application, the term "multiple" refers to two or more (including two). Similarly, "multiple groups" refers to two or more groups (including two groups), and "multiple pieces" refers to two or more pieces (including two pieces).

In the description of the embodiments of this application, the orientation or positional relationship indicated by the technical terms "center", "longitudinal", "horizontal", "length", "width", "thickness", "upper", "lower", "front", "rear", "left", "right", "vertical", "horizontal", "top", "bottom", "inside", "outside", "clockwise", "counterclockwise", "axial", "radial", "circumferential" and the like are the orientation or positional relationship shown in the accompanying drawings. The orientation or positional relationship is only for the convenience of describing the embodiments of the present application and simplifying the description, rather than indicating or implying that the indicated device or element must have a specific orientation or must be constructed and operated in a specific orientation, and therefore cannot be understood as limitations to the embodiments of the present application.

In the description of the embodiments of the present application, unless otherwise expressly specified and defined, the technical terms "installation", "link", "connection", "fastening" and the like should be understood in a broad sense, for example, it may be a fixed connection, a detachable connection, or an integrated connection; it can also be a mechanical connection or an electrical connection; it can be a direct connection or an indirect connection through an intermediate medium; and it can be the internal communication between the two elements or the interaction relationship between the two elements. Those ordinary skilled in the art can understand the specific meanings of the above terms in the embodiments of the present application according to specific situations.

In the field of batteries, the application scale of power batteries is gradually increasing, and the power batteries are widely used in energy storage systems of power stations, power sources of vehicles, aerospace machinery and other fields. Thus, the demand for power batteries in the market is also gradually increasing. In order to achieve a certain output power or output voltage, in some cases, the battery is usually composed of a plurality of battery cells connected in series or parallel, and the high voltage connections between the plurality of battery cells are usually achieved by the confluence components.

The inventor of the present application note that during the use of the battery, under a condition that the battery is affected by the external environment and produces vibrations, there is usually a certain difference between the vibration amplitudes of the adjacent battery cells or the adjacent batteries, resulting in the relative vibrations between the adjacent battery cells or the adjacent batteries. In consideration of the installation direction of the battery cells, the relative vibrations are usually relative vibrations in the thickness direction of the confluence component. On this basis, a gap is usually configured between the adj acent battery cells or the adj acent batteries to form the expansion margin, the region of the middle portion of the confluence component corresponding to the gap should form an unsupported structure connecting two sides of the confluence component. In order to form the electrical connection, the confluence component usually made of wear proof hard metal materials. The portion of the confluence component connecting two sides of the confluence component may be subjected to the force exerted by the aforementioned relative vibrations, and it is easy to cause fatigue fracture due to repeated stress concentration. Finally, the problem of high voltage sampling failure occurs.

Based on the above considerations, in order to solve the problem of fracture caused by the confluence component being affected by the stress during the use of the battery, the inventor of the present application proposes a confluence component and a corresponding battery. By changing the hardness of the confluence component to absorb the relative vibrations of the two end of the confluence component in the thickness direction, so as to mitigate the problem of fatigue fracture of the confluence component.

The technical solution described in the embodiments of the present application is applicable to the battery and the electrical device using the battery.

Here, the electrical device may be a vehicle, a mobile phone, a portable device, a notebook computer, a ship, a spacecraft, an electric toy, an electric tool and the like. The vehicle may be a fuel vehicle, a gas vehicle or a new energy vehicle, and the new energy vehicle may be a pure electric vehicle, a hybrid vehicle or an extended-range vehicle and the like. The spacecraft includes an airplane, a rocket, a space shuttle and a spaceship and the like. The electric toy includes a stationary or mobile electric toy, such as a game console, an electric vehicle toy, an electric ship toy and an electric aircraft toy and the like. The electric tool includes a metal cutting electric tool, a grinding electric tool, an assembling electric tool and a railway used electric tool, such as an electric drill, an electric grinder, an electric wrench, an electric screwdriver, an electric hammer, an impact electric drill, a concrete vibrator and an electric planer and the like. The above electrical device is not specifically limited in the present application.

It is understood that the battery disclosed in the embodiment of the present application may be used in, but not limited to, the aforementioned electrical device such as a vehicle, a ship or an aircraft. The power supply system of the electrical device may be composed of the confluence component, the battery disclosed in the present application, so that the reliable electrical connection and corresponding reliable power supply can be provided in the harsh environment with frequent vibrations. On this basis, in the following embodiments and the drawings of the present application, it is illustrated that the confluence component is disposed between adjacent battery cells. However, it should be understood that the present application is not limited to this, and the confluence component provided by the embodiment of the present application can be applied to other occasions with relative vibrations and requiring electrical connection, which may also fall within the protection scope of the present application.

In the following embodiments, for the convenience of description, the electrical device is for example a vehicle.

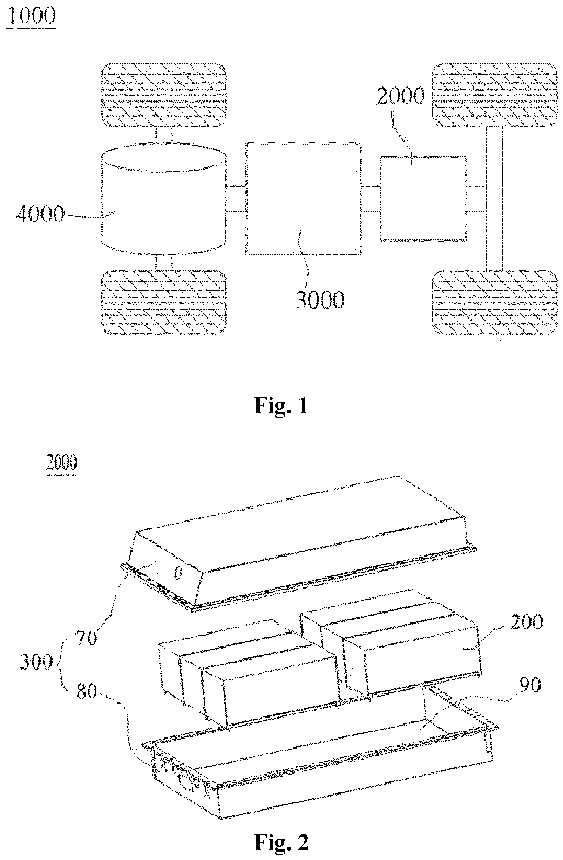

Fig. 1 is a schematic structure diagram of a vehicle provided by some embodiments of the present application. As shown in Fig. 1, the vehicle 1000 is provided with a battery 2000 inside, and the battery 2000 may be disposed at the bottom, or the head, or the tail of the vehicle 1000. The battery 2000 may be configured to supply power to the vehicle 1000, for example, the battery 2000 may be used as an operating power source of the vehicle 1000.

The vehicle 1000 may also include a controller 3000 and a motor 4000. The controller 3000 is configured to control the battery 2000 to supply power to the motor 4000, for example, for starting, navigation, and driving of the vehicle 1000.

In some embodiments of the present application, the battery 2000 can not only be used as the operating power source of the vehicle 1000, but can also be used as the driving power source of the vehicle 1000 to provide driving power for the vehicle 1000 instead of or partially instead of fuel or natural gas.

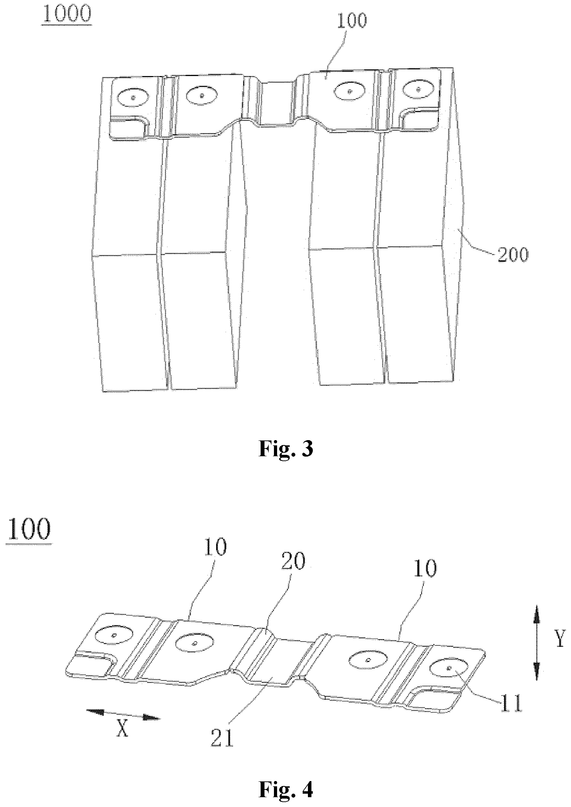

Fig. 2 is an exploded view of a battery provided by some embodiments of the present application. Fig. 3 is a schematic local structure diagram of the battery shown in Fig. 2. Fig. 4 is a schematic structure diagram of a confluence component provided by some embodiments of the present application.

As shown in Figs. 2 to 4, the battery 2000 may include a box 300, battery cells 200 and confluence components 100. The confluence component 100 is configured to electrically connect at least two battery cells 200. The confluence component includes connection parts 10 and a main body part 20, and the connection part 10 is electrically connected to the battery cell 200.

Optionally, the box 300 is configured to accommodate the battery cells, and the box 300 may be a variety of structures. In some embodiments, the box 300 may include a first box part 70 and a second box part 80, the first box part 70 and the second box part 80 cover with each other, and the first box part 70 and the second box part 80 jointly define the accommodation space 90 for accommodating the battery cells 200. The second box part 80 may be a hollow structure having an opening side, the first box part 70 is a plate structure, and the first box part 70 covers with the opening side of the second box part 80 to form the box 300 with the accommodation space 90. The first box part 70 and the second box part 80 each may be a hollow structure having an opening side, and the opening side of the first box part 70 covers with the opening side of the second box part 80 to form the box 300 with the accommodation space 90. Of course, the first box part 70 and the second box part 80 may be a variety of shapes, such as a cylinder, a cube and the like.

In order to improve the sealing performance of the first box part 70 and the second box body 80, a seal part, such as a sealant, a sealing ring and the like, may also be provided between the first box part 70 and the second box part 80.

Assuming that the first box part 70 covers at the top of the second box part 80, the first box part 70 may be called as an upper box cover, and the second box part 80 may be called as a lower box part.

Optionally, in the battery 2000, there may be a plurality of battery cells 200. Under a condition that there is a plurality of battery cells 200, the plurality of battery cells 200 may be connected in series, or in parallel, or in mixed, the mixed means that the battery cells 200 are connected in series and in parallel. The plurality of battery cells 200 may be connected directly in series, or in parallel, or in mixed. Of course, the plurality of battery cells 200 may be firstly connected in series, or in parallel, or in mixed to form a battery module, and then a plurality of battery modules may be connected in series, or in parallel, or in mixed to form a whole and accommodate in the box 300.

In some embodiments, as shown in Figs. 2 and 3, there are a plurality of battery cells 200. The plurality of battery cells 200 are firstly connected in series, or in parallel, or in mixed to form a battery module. Then, a plurality of battery modules are connected in series, or in parallel, or in mixed to form a whole.

The plurality of battery cells 200 in the battery module may be electrically connected by the confluence component 100 to achieve the parallel connection or series connection or mixed connection of the plurality of battery cells 200 in the battery module. There may be one or more confluence components 100, and each confluence component 100 is configured to electrically connect at least two battery cells 200.

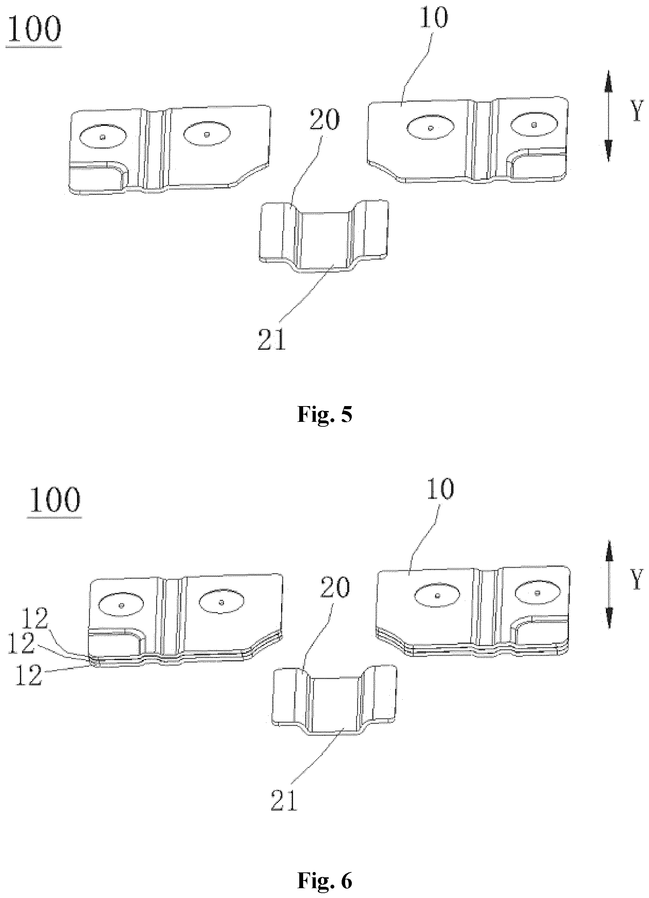

Please refer to Figs. 3 to 5, Fig. 3 is a schematic local structure diagram of the battery shown in Fig. 2; Fig. 4 is a schematic structure diagram of a confluence component provided by some embodiments of the present application; Fig. 5 is an exploded view of the confluence component shown in Fig. 4;

The present application provides a confluence component 100 for connecting battery cells 200, wherein the confluence component 100 has a predetermined length and a predetermined thickness, the confluence component 100 includes connection parts 10 and a main body part 20 arranged alternatively in a length direction X of the confluence component 100, the connection parts 10 are connected at two sides of the main body part 20 in the length direction X, the connection part 10 includes a connection region 11 electrically connected to the battery cell 200, and wherein in a thickness direction Y of the confluence component 100, the main body part 20 is at least partially recessed and is deformable under a preset stress to absorb vibrations in the thickness direction Y

The confluence component 100 provided by the embodiment of the present application is mounted between the battery cells 200, and the confluence component 100 includes the connection parts 10 and the main body part 20 arranged alternatively. Here, the connection part 10 is configured to electrical connect to the battery cell 200. The main body part 20 is connected between the two adjacent connection parts 10, and thus the two connection parts 10 are connected. Therefore, the required electrical connection is formed between the battery cells 200. Each connection part 10 includes at least one connection region 11 electrically connected to the battery cell 200, and the connection region 11 may be welded to the pole of the battery cell 200. At this time, there is a requirement for the strength of the connection region 11. Meanwhile, the main body part 20 crosses the gap region between the two adjacent battery cells 200, and bridges between the connection parts 10 respectively connected to the two battery cells 200.

The main body part 20 of the embodiment of the present application is made of a low hardness material. Thus, under a condition that relative vibrations occur between the battery cells 200 on the two sides of the main body part 20, that is, under a condition that relative vibrations occur between the connection parts 10 on the two sides of the main body part 20, the confluence component 100 may be subjected to a stress greater than a preset size. At this time, the main body part 20 may be firstly deformed, and the problem of fracture of the main body part 20 caused by stress concentration on the unsupported portion of the main body part 20 due to the vibrations may be mitigated. Further, it can also reduce the effect of the relative vibrations on the connection parts 10. Thus, the connection between the connection part 10 and the battery cell 200 is stable and reliable, and the overall reliability of the battery 2000 is improved. Therefore, the battery 2000 can work normally in the harsh environment of frequent vibrations. As an example, the main body part 20 may be made of a material with high electrical conductivity, soft quality and corrosion resistance. For example, the main body part 20 may be a soft aluminum sheet, but it should be understood that the present application is not limited thereto.

On this basis, the main body part 20 is also provided with a recessed part 21 that is recessed in the thickness direction of the main body part 20. Optionally, the recessed part 21 is recessed toward a direction near the battery cell 200. That is, the recessed part 21 is located in the gap region between two adjacent battery cells 200, thereby saving space for setting the confluence component 100 and the battery cells 200. By setting the recessed part 21, the main body part 20 can have a certain elastic and buffer effect. Under a condition that the main body part 20 is subjected to an external stress, the change of the angle of the bottom and the side wall of the recessed part 21 may absorb a portion of the stress. Further, under a condition that the stress exceeds the preset value, the main body part 20 will be further deformed due to the soft material, and the fracture of the main body part 20 may be avoided. The combination of the soft material and the recessed part 21 can effectively increase the upper limit of the stress that the main body part 20 can withstand, which can further increase the reliability of the connection.

It can be understood that each of the confluence components 100 in the embodiment of the present application may include a plurality of connection parts 10 and a plurality of main body parts 20. Here, the connection parts 10 may be designed according to the positions and the number of the battery cells 20 to be connected, it is only necessary to ensure that the connection parts 10 are connected at two sides of each main body part 20 in the length direction X. That is, there may be a plurality of adjacent connection parts 10. At the same time, in the embodiment where there are a plurality of connection parts 10 and a plurality of main body parts 20, the connection parts 10 and the main body parts 20 may be arranged alternately in a same direction, and the extension direction of the confluence component 100 may be folded or offset according to the relative positions between the battery cells 200 to be connected.

On this basis, in the following embodiments and the attached drawings, the present application is illustrated as two connection parts 10 and one main body part 20 being connected between two adjacent battery cells 200. However, it should be understood that the present application is not limited thereto.

In some embodiments, the main body part 20 is made of a same material as the connection parts 10, and the main body part 20 and the connection parts 10 are integrally formed.

The confluence component 100 in the embodiment of the present application may be made of the same material overall, so that the connection parts 10 and the main body part 20 can be completely and integrally formed. That is, the connection parts 10 and the main body part 20 can be integrally formed from a material that has low hardness and can be deformed under a preset stress, so that the process of connecting the connection parts 10 and the main body part 20 can be eliminated, and the cost can be saved.

It should be noted that, in this embodiment, the confluence component 100 includes the connection parts 10 and the main body part 20, in which the connection part 10 is connected to the battery cell 200, and normally the connection mode may be welded. Due to the requirement of welding conditions, the connection part 10 needs to have a certain strength and a certain size, that is, the connection part 10 needs to meet the preconditions of welding processing, thereby forming a stable connection with the battery cell 200. Therefore, it is necessary to guarantee the strength of the material for integrally forming when selecting the material of the connection part 10.

Refer to Fig. 6, Fig. 6 is an exploded view of a confluence component provided by some embodiments of the present application. In some embodiments, the connection part 10 includes a plurality of connection layers 12 stacked along the thickness direction Y

As mentioned above, the connection part 10 in the confluence component 100 needs to be electrically connected to the battery cell 200, which can be achieved by welding. Thus, there are certain requirements on the strength of the connection part 10 itself. In the embodiment where the connection parts 10 and the main body part 20 are integrally formed by using a low hardness material, the material of the connection part 10 itself may not reach the required welding conditions. At this time, the overall strength of the connection part 10 may be improved by strengthening the connection part 10. For example, the connection part 10 may be formed by pressing the multi-layer material, that is, the connection part 10 may be formed by setting the plurality of connection layers 12 and pressing the plurality of connection layers 10. Therefore, the strength of the connection part 10 may be improved, and the connection with the battery cell 200 may be more stable and reliable.

It is understood that the contour shapes and sizes of the plurality of connection layers 12 may be the same, and may also be different. When connecting the plurality of connection layers 12, it should be ensured that the position of the connection region 11 is stacked with the most connection layers 12, so that the strength of the connection region 11 is improved to meet the standard of connection with the battery cell 200. Optionally, under a condition that the shapes of the plurality of connecting layers 12 are different, in two adjacent connecting layers 12, the orthographic projection contour of the connection layer 12 away from the battery cell 200 on the connection layer 12 close to the battery cell 200 is within the orthographic projection contour of the connection layer 12 close to the battery cell 200. That is, in the direction close to the battery cell 200, the areas of the connection layers 12 are gradually increased, thereby ensuring that the connection with the battery cell 200 is stable.

It is understood that, in the embodiment where the connection part 10 includes the plurality of connection layers 12 that are stacked, the main body part 20 may include a corresponding plurality of layers that are stacked. That is, the main body part 20 is formed by hot-pressing a plurality of thin layers. At this time, the number of the thin layers in the main body part 20 may be the same as or may be different from the number of the connection layers 12 in the connection part 10. It is only necessary to ensure that under a condition that vibrations along the thickness direction Y occurs, the overall hardness of the main body part 20 can cause the deformation of the main body part 20 instead of the fracture of the main body part 20.

In some embodiments, the connection part 10 includes a reinforced plating layer at least partially disposed in the connection region 11.

The confluence component 100 in the embodiment of the present application can also improve the strength of the connection part 10 by adopting the method of forming reinforced plating layer. At the same time, the wear resistance and corrosion resistance of the connection part 10 can be improved according to the material of the reinforced plating layer. The reinforced plating layer may be disposed to cover the entire connection region 10, or the reinforced plating layer may also be disposed only in the connection region 11, thereby increasing the strength of the connection region 11 to enable the welding connection and to improve the reliability of the electrical connection. Optionally, the material of the reinforced plating layer can be corrosion-resistant metal materials such as tin, chromium, nickel or zinc.

In some embodiments, the strength of the main body part 20 is less than the strength of the connection part 10.

In the confluence component 100 provided by the embodiment of the present application, the main body part 20 may adopt a material of lower hardness and less strength compared than the connection part 10. That is, the main body part 20 and the connection part 10 may be made of different materials. At this time, the main body part 20 is easier to deform, and is different from the connection part 10 connected to the side surface of the battery cell 200. The main body part 20 bridges between the connection parts 10 on two sides of the main body part 20, that is, there is no support below the main body part 20. Due to the combination of the two factors, under a condition that the battery cells 200 are affected by the vibrations, the main body part 20 is firstly deformed to absorb the relative vibrations between the adjacent battery cells 200, and the main body part 20 is not easy to break. Therefore, the influence of the vibrations on the connection between the connection part 10 and the battery cell 200 can be eliminated while maintaining the electrical connection, and the overall stability of the electrical connection between the battery cells 200 may be ensured.

In some embodiments, the main body part 20 is welded to the connection part 10.

In the present application, in the embodiment where the connection parts 10 and the main body part 20 of the confluence component 100 are processed separately with different material, the main body part 20 and the connection part 10 can be connected by welding. At this time, the main body part 20 and the connection part 10 may be arranged in the same plane, the edges to be connected may be docked, and then the welding may be performed. Therefore, the overall thickness of the confluence component 100 may be reduced, the space may be further saved, and the smooth of the electrical connection may be ensured.

In some embodiments, the connection part 10 and the main body part 20 at least partially overlap in the thickness direction Y

Corresponding to the aforementioned connection mode of docking and welding, the connection parts 10 and the main body part 20 may also partially overlap, and then may be fixedly connected by the overlapped portion. For example, the fixed connection may be formed by punching holes in the overlapped region and using fasteners, may be formed by bonding or hot-pressing, or may be formed by welding in the overlapped region, which is not specifically limited in the present application. By using the overlapped region for the fixed connection, the connection between the main body part 20 and the connection parts 10 may be more stable and reliable.

In some embodiments, the connection part 10 is provided with a first fixing hole 13, the main body part 20 is provided with a second fixing hole 22, the confluence component 100 further includes a fastener 30, the first fixing hole 13 and the second fixing hole 22 are fitted through the fastener 30, so as to fixedly connect the connection part 10 to the main body part 20; and/or one of the main body part 20 and the connection part 10 is provided with a protruding end 40, and the other one is provided with a connection hole 50, the confluence component 100 further includes a limit component 60, the protruding end 40 passes through the connection hole 50 and fits the limit component 60, so as to fixedly connect the connection part 10 to the main body part 20.

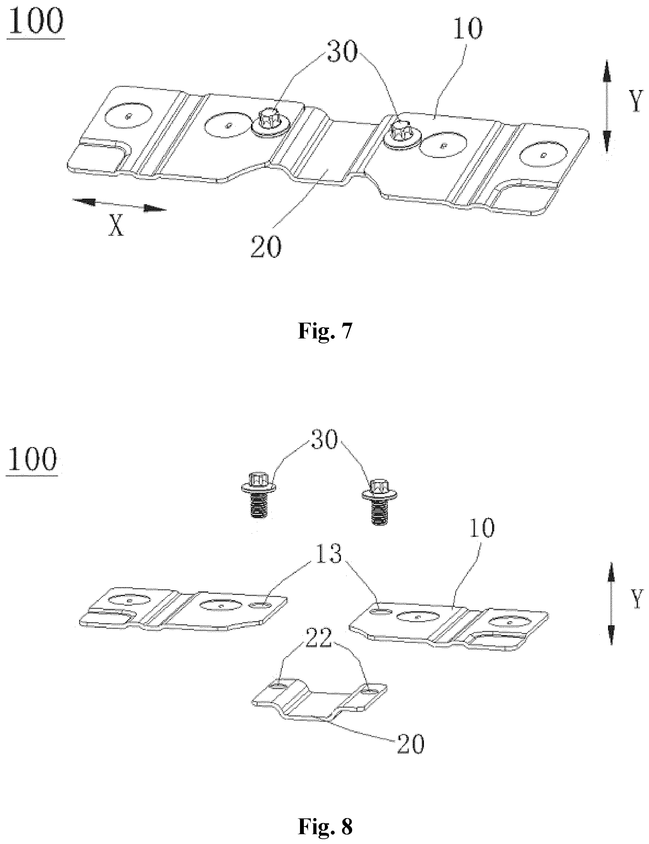

Please refer to Figs. 7 and 8, Fig. 7 is a schematic structure diagram of a confluence component provided by some embodiments of the present application, and Fig. 8 is an exploded view of the confluence component shown in Fig. 7. In the embodiment where the connection parts 10 and the main body part 20 in the confluence component 100 have partially overlapped regions, as described above, there may be various connection methods between the connection parts 10 and the main body part 20. As some optional examples, the first fixing hole 13 and the second fixing hole 22 may be provided in the overlapped region of the connection part 10 and the overlapped region of the main body part 20 respectively, the two fixing holes are aligned in the thickness direction Y, and then the fastener 30 passes through two fixing holes and fixedly connects the connection parts 10 and the main body part 20. For example, here, the fastener 30 may be a screw and a nut.

It is understood that the shapes of the first fixing hole 13 and the second fixing hole 22 are not limited in the embodiment of the present application, and can be in the form of a round hole, a square hole, a triangular hole, and so on. The shape of the fastener 30 is adjusted according to the shapes of the holes, it is only necessary to ensure that the shapes of the two fixing holes and the fastener 30 can be matched.

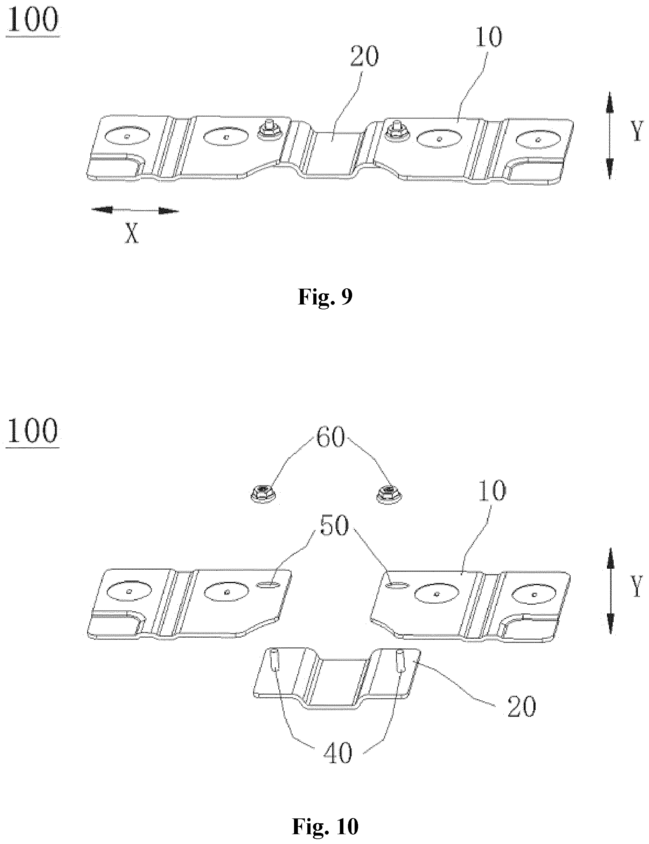

Please refer to Figs. 9 and 10, Fig. 9 is a schematic structure diagram of a confluence component provided by some embodiments of the present application, and Fig. 10 is an exploded view of the confluence component shown in Fig. 9. As some other optional examples, one of the connection part 10 and the main body part 20 may be provided with the connection hole 50, and the other one may be provided with the protruding end 40. The protruding end 40 protrudes from the surface of the other one of the connection part 10 and the main body part 20 close to the one of the connection part 10 and the main body part 20, and toward a direction close to the one of the connection part 10 and the main body part 20. Further, the protruding end 40 and the connection hole 50 are aligned in the thickness direction Y, so that the protruding end 40 can pass through the connection hole 50 during assembly, and the exposed portion of the protruding end 40 passing through the connecting hole 50 fits limit component 60, so as to fixedly connect the connection part 10 and the main body part 20.

For example, the outer peripheral surface of the protruding end 40 may be provided with threads, and the limit component 60 may be a nut; or the protruding end 40 may be a fixed pin, and the limit component 60 may be a buckle; or the protruding end 40 may have a penetrating hole extending parallel to the plane of the connection part 10, and the limit component 60 may be a positioning pin and may pass through the penetrating hole. The specific connection mode is not limited in the present application.

In summary, in the embodiment where the connection part 10 and the main body part 20 at least partially overlap, the connection part 10 and the main body part 20 can also be connected by punching a hole and using the fastener or the limit component, and the connection method is simple, stable in structure and easy to implement.

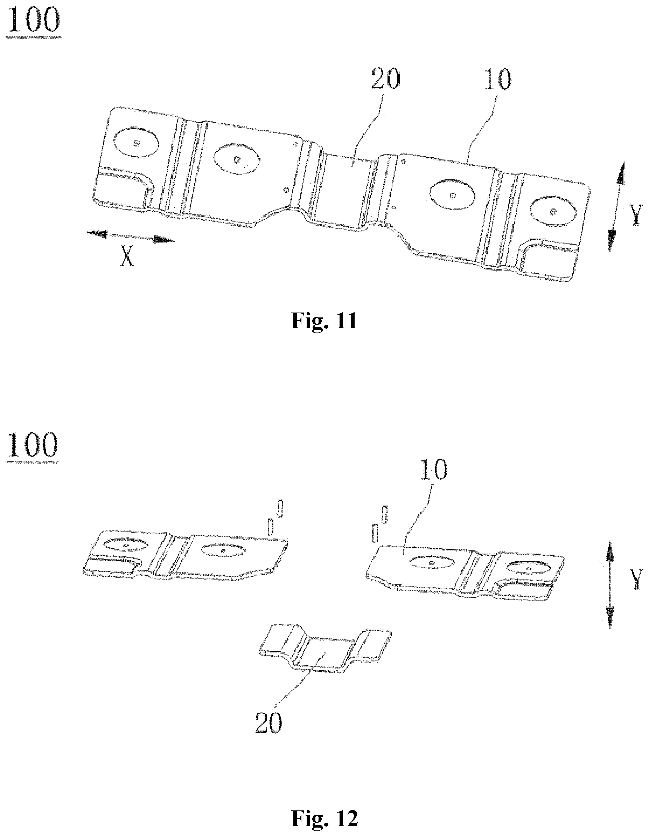

Please refer to Figs. 11 and 12, Fig. 11 is a schematic structure diagram of a confluence component provided by some embodiments of the present application, and Fig. 12 is an exploded view of the confluence component shown in Fig. 11. In some embodiments, the connection part 10 is riveted to the main body part 20.

In the embodiment where the connection part 10 and the main body 20 in the confluence component 100 at least partially overlap, the connection part 10 and the main body 20 may also be riveted. The rivet holes may be provided in the overlapped regions of the connection part 10 and the main body part 20, and the rivet may pass through the rivet holes in the connection part 10 and the main body part 20. Further, a force is applied to causes the rivet to form a nail head, so as to fixedly connect the connection part 10 and the main body part 20. It is understood that, similarly to the aforementioned setting method of the protruding end 40 and the connection hole 50, the rivet may also be fixedly connected to one of the connection part 10 and the main body part 20 in advance, then pass through the prefabricated hole on the other, and finally form the nail head.

The riveting process equipment is simple, and the connection is strong, anti-seismic and anti-impact, so it is frequently used in the vibration load situation. Using the riveting method to connect the main body part 20 and the connection part 10 can provide a stable and reliable connection, and the cost is low.

Referring again to Fig. 2, in the second aspect, an embodiment of the present application provides a battery 2000 including a plurality of battery cells 200 and the confluence component 100 in the above embodiments, here, adjacent battery cells 200 are electrically connected through the confluence component 100.

The embodiment of the present application further provides a battery 2000 including a plurality of battery cells 200 as described above. It is to be understood that each battery cell 200 may include one or more cells. Under a condition that the battery cell 200 includes a plurality of cells, each cell is electrically connected to the connection part 10. At the same time, the main body part 20 is disposed between two adjacent battery cells 200 to connect the connection parts 10 at two sides. The number of cells in each battery cell 200 may be the same or different, and it may be simply configured by changing the length of the connection part 10 and the setting position of the connection region 11 accordingly, which is not specifically limited in the present application. At the same time, the plurality of battery cells 200 of the battery 2000 may be arranged along a same direction, arranged along a polyline, or arranged in multiple rows and multiple columns. Here, the extension direction of the connection part 10 needs to be consistent with the extension direction of the battery cell 200 connected to the connection part 10, while the extension direction of the main body part 20 is set according to the relative position between the adjacent battery cells 200, and the circuit design is planned according to the requirements of the output power or the output voltage.

Meanwhile, the battery 2000 provided by the embodiment of the present application may also include an isolation plate, which may be arranged in a same layer as the confluence component 100, that is, arranged between the upper cover of the battery box and the plurality of battery cells 200. At this time, the isolation plate is made of an insulating material in which there are a plurality of holes of the same shape as the confluence component 100. When processing the battery 2000, the plurality of confluence components 100 can be embedded in the isolation plate according to the preset positions, and then the isolation plate is uniformly connected to the cells in the plurality of battery cells 200 by welding, thereby effectively improving the production efficiency and reducing the alignment error during welding.

Referring again to Fig. 1, an embodiment of the present application provides an electrical device including the battery 2000 provided in the embodiment in the second aspect. As described above, the battery 2000 may be used as the driving power source or the control power source of the electrical device 1000.

In an example, the confluence component 100 provided by the embodiment of the present application may include two connection part 10 arranged at intervals and a main body part 20 connected between the two connection parts 10. Here, the main body part 20 and the two connection parts 10 at least partially overlap, and may be connected by welding in the overlapped region. The hardness of the main body part 20 in the confluence component 100 is less than the hardness of the connection part 10, and the main body part 20 can be deformed when subjected to vibrations perpendicular to the overlapping direction, thereby avoiding the fracture of the main body part 20 due to vibrations, and effectively improving the stability of the connection of the confluence component 100. Further, the main body part 20 may have a recessed part 21, and the recessed part 21 is recessed toward a direction near the battery cells 200 when the confluence component 100 is connected between the battery cells 200. The elasticity of the recessed part 21 and the low hardness material of the main body part 20 can absorb vibrations more effectively, and the fracture of the main body part 20 may be avoided.

Finally, it should be noted that: the above embodiments are only used to illustrate the technical solutions of the present application, but not to limit the technical solutions of the present application; although the present application is described in detail with respect to the above embodiments, those ordinary skilled in the art should understand: the technical solutions disclosed in the above embodiments can be modified, or some or all of the technical features can be replaced by equivalents; and these modifications or replacements do not make the essence of the corresponding technical solutions deviate from the spirit and scope of the technical solutions in the embodiments of the present application, and should be included within the protection scope of the claims and the description of the present application. In particular, as long as there is no structural conflict, various technical features described in various embodiments can be combined in any manner. The present application is not limited to the specific embodiments disclosed herein, but includes all technical solutions falling within the scope of the claims.

## Claims

1. A confluence component for connecting battery cells, wherein the confluence component has a predetermined length and a predetermined thickness, the confluence component comprises connection parts and a main body part arranged alternatively in a length direction of the confluence component, the connection parts are connected at two sides of the main body part in the length direction, the connection part comprises a connection region electrically connected to the battery cell, and wherein in a thickness direction of the confluence component, the main body part is at least partially recessed and is deformable under a preset stress to absorb vibrations in the thickness direction.

2. The confluence component according to claim 1, wherein the main body part is made of a same material as the connection parts, and the main body part and the connection parts are integrally formed.

3. The confluence component according to claim 1 or 2, wherein the connection part comprises a plurality of connection layers stacked along the thickness direction.

4. The confluence component according to any of claim 1 to 3, wherein the connection part comprises a reinforced plating layer at least partially disposed in the connection region.

5. The confluence component according to claim 1, wherein a strength of the main body part is less than a strength of the connection part.

6. The confluence component according to claim 5, wherein the main body part is welded to the connection part.

7. The confluence component according to claim 5, wherein the connection part and the main body part at least partially overlap in the thickness direction.

8. The confluence component according to claim 7, wherein the connection part is provided with a first fixing hole, the main body part is provided with a second fixing hole, the confluence component further comprises a fastener, the first fixing hole and the second fixing hole are fitted through the fastener, so as to fixedly connect the connection part to the main body part; and/or
one of the main body part and the connection part is provided with a protruding end, and the other one is provided with a connection hole, the confluence component further comprises a limit component, the protruding end passes through the connection hole and fits the limit component, so as to fixedly connect the connection part to the main body part.

9. The confluence component according to claim 7, wherein the connection part is riveted to the main body part.

10. A battery comprising a plurality of battery cells and the confluence component according to any of claims 1 to 9, wherein adjacent battery cells are electrically connected through the confluence component.

11. An electrical device comprising the battery according to claim 10.
